# EUROPEAN PATENT APPLICATION

(11) **EP 3 825 083 A1**
(43) Date of publication of application: **26.05.2021**
(21) Application number: 19837255.9
(22) Date of filing: 17.06.2019
(51) Int. Cl.: B26D 5/10

(54) **THE PRESENT INVENTION RELATES TO A FOOD CUTTING DEVICE**

(30) Priority: 17.07.2018 HK 18109280; 08.05.2019 HK 19123470
(71) Applicant: Wong, Yan Kwong, Kowloon Bay Kowloon, Hong Kong (CN)
(72) Inventor: Wong, Yan Kwong, Kowloon Bay Kowloon, Hong Kong (CN)
(74) Representative: Cabinet Chaillot
(86) International application number: PCT/IB2019/055015
(87) International publication number: WO 2020/016676

(57) **Abstract**

A food cutting device, comprising a base (10). A first mounting member (11) and a second mounting member (12) are respectively formed at two ends of the top of the base. A first fixing member (20) movably passes through the first mounting member (11). A rotating component (30) is located at the side of the second mounting member (12) distant from the first mounting member (11). One end of the rotating component (30) is rotatably mounted in the mounting hole (121) of the second mounting member (12) and a second fixing member (40) is detachably mounted. The second fixing member (40) can rotate with the rotating component (30). The top of the base (10) is provided with a support seat (50) between the first mounting member (11) and the second mounting member (12). The support seat (50) can slide at the top of the base (10) in the wide direction of the base (10). The upper part of the support seat (50) located at one side of the first fixing member (20) and of second fixing member (40) and the side of the upper part of the support seat (50) close to the first fixing member (20) and the second fixing member (40) are provided with a cutting member (60). The upper part of the support seat (50) is provided with a food outlet (521) communicated with the cutting opening (63) of the cutting member (60). The food cutting device can cut food into slices, and peeling of the food and cutting of the food into slices can be continuously carried out.

## Description

### TECHNICAL FIELD

The present invention relates to a food cutting device

### BACKGROUND OF THE INVENTION

The fruits and vegetables are common food consumed by human beings. A household knife is usually used to cut fruits and vegetables into slices, such form of works are actually inconvenient, time and effort are wasted. Particularly, the food is first required to be peeled off the skin before cutting. As such, the efficiency of such cutting work is not high.

### SUMMARY OF THE INVENTION

The problem to be solved in the present invention is to that the peeling of food and the cutting of food into slices can be continuously performed without needing a stepwise operation, thereby saving on time and saving on labour.

The present invention provides a food cutting device, comprising a body, characterized in that the said body comprises first and second mounting members extended from two respective ends of a top portion of the said body, a first positioning member is removably mounted inside the said first mounting member, a first end portion of the said first positioning member is arranged between the said first and second mounting members, a second end portion of the said first positioning member is arranged on a side of the said first mounting member distal to the said second mounting member, a rotating member is arranged on a side of the said second mounting member distal to the said first mounting member, the said second mounting member comprises a second mounting hole adapted for allowing an end portion of the said rotating member to be rotataby mounted inside the said second mounting hole, the said second positioning member is configured to be removably mounted to the said rotating member, the said second positioning member is configured to be rotated by the said rotating member, the said second positioning member is arranged at a position between the said first and seconding mounting members opposing to the said first positioning member, a support member is arranged on top of the said body and between the said first and second mounting members, the said support member is adapted for slidingly moving along a top portion of the said body in a widthwise direction of the said body, a cutting member is removably mounted to a top side portion of the said support member proximal to the said first and second positioning members, the said support member comprises an output aperture member being configured for connecting with a cutting member aperture of the said cutting member is arranged on a top portion of the said support member.

Typically, the said support member further comprises a support member body and a support element mounted on a side of a top portion of the said support member, the said support member body is adapted for slidingly moving along the said top portion of the said body, the said support element is arranged between two end portions of said first positioning member and a side of the said second positioning member, the said cutting member is configured for being removably mounted to a side portion of the said support element proximal to the said first and second positioning members, the said support element comprises the said output aperture member configured for being connected with the said cutting member aperture of the said cutting member.

Typically, the said top portion of the said body comprises a concave member arranged between the said first and second mounting members, a plurality of sliding tracks are arranged on two end portions of the said concave member, a first portion of the said support member body is configured to be received by the said concave member, the said support member further comprises a plurality of sliding elements mounted to two ends of the of said first portion of the said support member body, the plurality of the said sliding element are slidingly mounted inside the corresponding sliding tracks.

Typically, a restricting element adapted for restricting the sliding movement of the corresponding sliding element is mounted to an end of the said sliding track, the said restricting element is disposed proximal to the said support member body and distal to the said support element.

Typically, a curved structure is mounted between both top portions of the said support element and support member body, the said curved structure comprises a hand receiver adapted for allowing the user's hand to rest on it.

Typically, the said first mounting member comprises a first mounting hole, the said first and second mounting holes are oppositely arranged on the said first and second mounting members respectively, the said first mounting member further comprises a first mounting sleeve being mounted inside the said first mounting hole, the said first mounting sleeve is configured for allowing the said first positioning member to be removably mounted inside the said first mounting sleeve.

Typically, the said first positioning member comprises a first positioning member body and a ring-shaped structure being mounted to an end of the said first positioning member body, another end of the said first positioning member body is arranged at a position between the said first and second mounting members which is distal to the said ring-shaped structure, the said ring-shaped structure is arranged on a side of the said first mounting member distal to the said second mounting member.

Typically, the said rotating member comprises a connecting element and a driving element, the said connecting element is rotataby mounted to the said seconding mounting hole, a first end of the said connecting element is mounted to the said driving element, a second end of the said connecting element is removably mounted to the said second positioning member, the said driving element is mounted to a side of the said second mounting member distal to the said first mounting member, the said connecting element is adapted to be driven to rotate relative to the said second mounting member by the said driving element, the said second mounting member is adapted to be rotated by the said connecting element.

Typically, the said connecting element comprises a connecting structure mounted to the said second end of the said connecting element, the said connecting structure is arranged between the said first and second mounting members, the said second positioning member comprises a second positioning member body and a plurality of extensions extended from an end of the said second positioning member body, the said connecting structure is mounted to the said second positioning member body.

Typically, the said connecting element further comprises a connecting structure mounted to the said second end of the said connecting element, the said connecting structure is arranged between the said first and second mounting members, the said second positioning member comprises a second positioning member body and a positioning structure extended from an end portion of the said second positioning member body, the said connecting structure is mounted to the said second positioning member body.

Typically, a locking member is arranged between the said connecting structure and the said second positioning member body, the said locking member is adapted for locking the said second positioning member body to the connecting structure and preventing the said second positioning member to be removed from the said connecting structure when the said second positioning member is rotated by the said connecting structure.

Typically, the said locking member comprises a convex structure arranged inside the said second positioning member body and L-shaped concave region being arranged on the said connecting structure, the said convex structure and a first portion of the said L-shaped concave region is configured to be received with each other, the said second positioning member is adapted to be locked by the said connecting structure when the said convex structure is received by a second portion of the said L-shaped concave region, an extending direction of the said second portion of the said L-shaped concave region is opposite to a rotational direction of the said connecting structure, the said second portion of the said L-shaped concave region is adapted for moving towards the said convex structure when the velocity of rotating movement of the said connecting element is higher than the velocity of the said second positioning member and when a reaction force is formed against the said second positioning member by a rotational movement of the said second positioning member driven by the said connecting element.

Typically, the plurality of extensions of the said second positioning member body is spacedly arranged along the circumference of an end of the said second positioning member body, a least one inclined extension of the said second positioning member body is inclinedly arranged relative to the said second positioning member body, the direction of the positive horizontal axis of the said inclined extension is substantially the same with the rotational direction of the said connecting element.

Typically, the said positioning structure is formed by two sheet structures crossing each other perpendicularly, the positioning structure comprises a sharp structure mounted to a crossing portion of two said sheet structures distal to the said second positioning member body.

Typically, the said cutting member comprises a cutting member body and a cutter mounted to the said cutting member body, the said support element comprises a first cutting member receiver adapted for receiving the said cutting member body arranged proximal to the sides of said first and second positioning members, the said cutting member body comprises a longitudinal opening, the line of direction of the said longitudinal opening is parallel to the length of the said body, the cutter is arranged on a side of the said longitudinal opening, the said cutting member aperture is formed between a sharp edge of the said cutter and the said longitudinal opening.

Typically, the said body further comprises a plurality of suction cups mounted to four corner portions of the bottom face of the said body.

Typically, the said second mounting member further comprises a second mounting sleeve mounted inside the said second mounting hole of the said second mounting member, the said connecting element is rotatably mounted inside the said second mounting member.

Typically, the said support member further comprises a second positioning member receiver configured for receiving the said second positioning member arranged on the bottom portion of the said support member.

Typically, the said body further comprises a second cutting member receiver configured for receiving the said cutting member arranged on the bottom portion of the said body.

### BRIEF DESCRIPTION OF DRAWINGS

This and other objects, features and advantages of the present invention will become apparent upon reading of the following detailed descriptions and drawings, in which:
Fig. 1 shows a front view of an embodiment of the present invention;
Fig. 2 shows a bottom view of the embodiment of the present invention;
Fig. 3 shows an exploded view of the embodiment of the present invention;
Fig. 4 shows a perspective view of the first mounting member, second mounting member, first positioning member, second positioning member and the rotating member of the embodiment of the present invention;
Fig. 5 shows a perspective view of the second positioning member of an alternative embodiment of the present invention; and
Fig. 6 shows an exploded view of second positioning member and the rotating member of Fig. 5.

### DESCRIPTION OF EMBODIMENTS

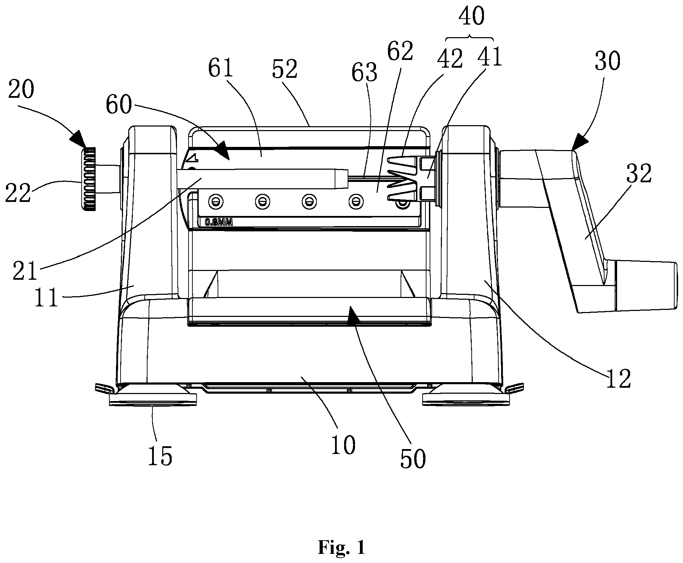

Referring to Fig. 1 to Fig. 3, a food cutting device provided by the present invention comprises a body 10, a first positioning member 20, a second positioning member 40, a rotating member 30, a support member 50 and a cutting member 60.

The body 10 includes a first mounting member 11 and a second mounting member 12 being formed from two ends of a top portion of the body 10 respectively. a first positioning member 20 is removably mounted inside the said first mounting member 11 so that the first positioning member 20 can be removed or detached from the first mounting member 11, which is convenient for cleaning and replacement. A first end portion of the first positioning member 20 is arranged between the first mounting member 11 and the second mounting member 12, a second end portion of the first positioning member 20 is arranged on a side of the first mounting member 11 distal to the second mounting member 12.

The two ends of the top portion of the body 10 are respectively formed with the first mounting member 11 and the second mounting member 12. The first positioning member 20 is removably mounted inside the first mounting member 11, so the first positioning member 20 can be detached from the first mounting member 11, which is convenient for cleaning, replacement, etc. The second positioning member 40 can be rotated by the rotating member 30, The second positioning member 40 is arranged at a position between the first mounting member 11 and the seconding mounting member 12 opposing to the first positioning member 20. The first positioning member 20 and the second positioning member 40 are used for fixing food such as carrots, carrots, cucumbers and so on. When the rotating member 30 is rotated, the second positioning member 40 can also be rotated accordingly. When the food is being mounted by the first positioning member 20 and the second positioning member 40, the rotation of the second positioning member 40 can allow both food and the first positioning member 20 to follow the rotational movement of the second positioning member 40 to rotate.

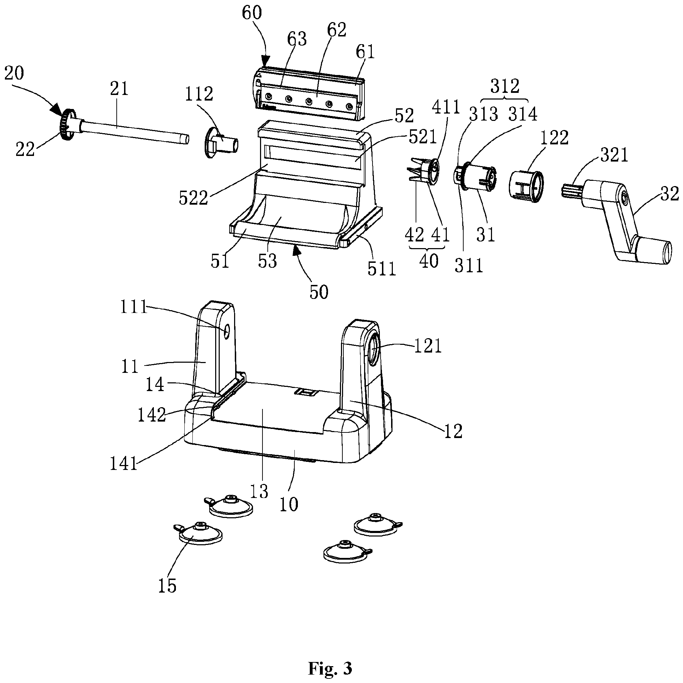

A support member 50 is arranged on top of the body 10 and between the first mounting member 11 and the second mounting member 12. The support member 50 can be slidingly moved along a top portion of the body 10. Preferably, the support member 50 can be slidingly moved along a top portion of the body 10 in a widthwise direction of the body 10. A cutting member 60 is removably mounted to a top side portion of the support member 50 proximal to the first positioning member 20 and the second positioning member 40. Therefore, the cutting member 60 can be removed from the support member 50. Such arrangement is convenient for cleaning and replacement of the above parts. Preferably, the support member 50 comprises an output aperture member 521 or food outlet 521 being configured for connecting with a cutting member aperture 63 of the cutting member 60 is arranged on a top portion of the support member 50 (see Fig. 3). The structure of the cutting member aperture 63 corresponds to the structures of the first positioning member 20 and the second positioning member 40 in order to facilitate cutting food process. The cutting member 60 is used to peel off the food skin and cut food such as carrots into slices. The food skins being cut and food being sliced can be removed from the output aperture member 521 or food outlet 521 by passing through the cutting member aperture 63.

The four corners of the bottom of the body 10 are respectively provided with suction cups 15. The construction of the suction cup 15 facilitates the placement of the food cutting device, and can allow the device to be fixed on the working table surface to prevent the body 10 from being removed from the surface when the food cutting device is in operation.

Alternatively, the support member 50 includes a second positioning member receiver for receiving the second positioning member 40 arranged on the bottom portion of the support member 50. It is convenient for storing the second positioning member 40 inside the support member 50.

The detailed description of the structure of the present invention is described as follow:
Referring to Fig. 1 and Fig. 3, in particular, the first mounting member 11 includes a first mounting hole 111, the first mounting member 11 also includes a first mounting sleeve 112 being mounted inside the first mounting hole 111. Particularly, the first mounting sleeve 112 allows the first positioning member 20 to be removably mounted inside the first mounting sleeve 112.

The first positioning member 20 includes a first positioning member body 21 and a ring-shaped structure 22 being mounted to an end of the first positioning member body 21, the first positioning member body 21 is removably mounted inside the first mounting sleeve 112. As such, the first mounting sleeve 112 can provide structural protection for the first positioning member body 21 and ensure the first positioning member body 21 to be disposed in a correct location. Another end of the first positioning member body 21 is arranged at a position between the first mounting member 11 and second mounting member 12 which is distal to the ring-shaped structure 22. The ring-shaped structure 22 is arranged on a side of the first mounting member 11 distal to the second mounting member 12. The ring-shaped structure 22 is arranged to facilitate the first positioning member body 21 to be mounted to or dismounted from the first mounting sleeve 112.

The rotating member 30 includes a connecting element 31 and a driving element 32, the connecting element 31 is rotataby mounted to the seconding mounting hole 121, a first end of the connecting element 31 is mounted to the driving element 32, a second end of the connecting element 31 is removably mounted to the second positioning member 40, the driving element 32 is mounted to a side of the second mounting member 12 distal to the first mounting member 11, the connecting element 31 is driven to rotate relative to the second mounting member 12 by the driving element 32, the second mounting member 12 can be rotated by the connecting element 31. The driving element 32 is a handle, and when the handle is moved to be rotated by the user's hand, the connecting element 31 can then be driven to rotate relative to the second mounting member 12.

In the embodiment, one end of the driving element 32 is provided with a driving element mounting portion 321, and the driving element mounting portion 321 is embedded inside the first end portion of the connecting element 31 so that the driving element 32 can be fixedly mounted to the first end portion of the connecting element 31

Preferably, the second mounting hole 121 of the second mounting member 12 is provided with a second sleeve member 122, the connecting element 31 is rotatably mounted inside the second sleeve member 122. The second sleeve member 122 can provide structural protection for the connecting element 31

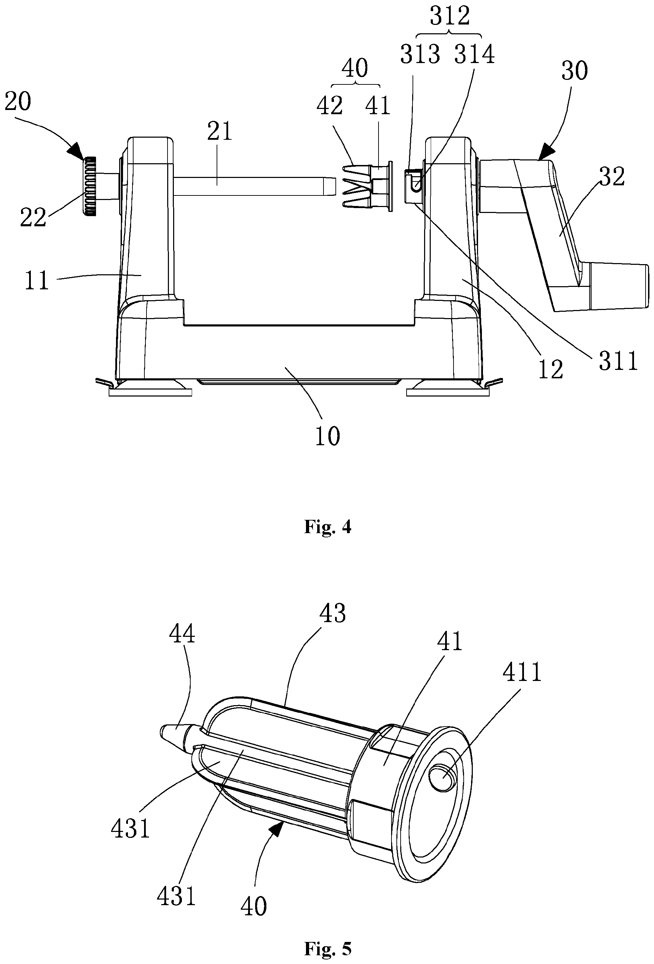

As shown in conjunction with Fig. 4, the connecting element 31 includes a connecting structure 311 mounted to the second end of the connecting element 31. The connecting structure 311 is arranged between the first mounting member 11 and the second mounting members 12.

In an embodiment, the second positioning member 40 includes a second positioning member body 41 and a plurality of extensions 42 extended from an end of the second positioning member body 40. The second positioning member body 41 and the plurality of extensions 42 are integrally formed

The second positioning member body 41 and the connecting structure 311 can be insertedly mounted with each other to facilitate the disassembly of the second positioning member 40. A plurality of extensions 42 are used for mounting inside or inserting into an end of food, such as carrot. Another end of the first positioning member body 21 of the first positioning member 20 away from the ring-shaped structure 22 is used for mounting another end of the food, such as a carrot so that the food can be fixed in a position through the first positioning member 20 and the second positioning member 40. When the second positioning member 40 is driven to rotate by the connecting element 31, the food, such as the carrot and the first positioning member 20 can also be driven to rotate. As such, the cutting member 60 can peel off the food skin and cut the food being rotated, such as carrots.

A locking member is arranged between the connecting structure 311 and the second positioning member body 41, the locking member can be used for locking the second positioning member body 41 to the connecting structure 311 and preventing the second positioning member 40 to be removed from the connecting structure 311 when the second positioning member 40 is rotated by the connecting structure 311. Since the plurality of extensions 42 of the second positioning member 40 are mounted into an end of the food, portions of the extensions 42 are received inside the food. When the second positioning member 40 is being rotated by the connecting element 31, the second positioning member 40 faces resistance from food due to the fact that portions of the second positioning member 40 located inside the food become barrier to resist the second positioning member 40 to move. In particular, the second positioning member body 41 of the second positioning member 40 and the connecting structure 311 of the connecting element 31 are mounted with each other. When the movement of the second positioning member 40 is subject to resistance from food, the velocity of rotational movement of the connecting element 31 will then be higher than the velocity of the rotational movement of the second positioning member 40. In these circumstances, the second positioning member 40 can easily be removed from the connecting element 31. In the embodiment, it will be solved by construing a locking member. When the second positioning member body 41 of the second positioning member 40 can be locked by the connecting structure 311 of the connecting element 31, the second positioning member 40 will not be removed from the connecting element 31 during application of the present invention.

Specifically, the locking member includes a convex structure 411 arranged inside the second positioning member body 41 and L-shaped concave region 312 being arranged on the connecting structure 311. When the second positioning member body 41 of the second positioning member 40 is insertedly mounted to the connecting structure 311 of the connecting element 31, the convex structure 411 and a first portion 313 of the L-shaped concave region 312 can be received with each other. The second positioning member 40 can be locked by the connecting structure 311 when the convex structure 311 is received by a second portion 314 of the L-shaped concave region 312. An extending direction of the second portion 314 of the L-shaped concave region 312 is opposite to a rotational direction of the connecting structure 311, the second portion 314 of the L-shaped concave region 312 can be moved towards the convex structure 411 when the velocity of rotating movement of the connecting element 31 is higher than the velocity of the second positioning member 40 and when a reaction force or resistance from the food is formed against the second positioning member 40 by a rotational movement of the second positioning member 40 driven by the connecting element 31. Particularly, when the convex structure 411 is received by the L-shaped concave region 312, the second positioning member body 41 will then be locked by connecting structure 311 in order to prevent the second positioning member 40 be removed from the connecting element 31.

For example, assuming the rotational direction of the rotating member 30 is in a clockwise direction, the extending direction of the second portion 314 of the L-shaped concave region 312 is in a counterclockwise direction. Provided that the plurality of the extensions 42 of the second positioning member 40 are insertedly mounted inside an end portion of the food being mounted to the device of the present invention, when the rotating member 30 is rotated clockwisely and the second positioning member 40 rotates in a clockwise direction together with the connecting element 31, the motion of the second positioning member 40 will be resisted by the food. The second positioning member body 41 can be locked by the connecting structure 311 when the convex structure 311 is received by a second portion 314 of the L-shaped concave region 312. An extending direction of the second portion 314 of the L-shaped concave region 312 is opposite to a rotational direction of the connecting structure 311, the second portion 314 of the L-shaped concave region 312 can be moved towards the convex structure 411 when the velocity of rotating movement of the connecting element 31 is higher than the velocity of the second positioning member 40 and when a reaction force or resistance from the food is formed against the second positioning member 40 by a rotational movement of the second positioning member 40 driven by the connecting element 31. Particularly, when the convex structure 411 is received by the L-shaped concave region 312, the second positioning member body 41 will then be locked by connecting structure 311 in order to prevent the second positioning member 40 be removed from the connecting element 31.

In the embodiment, the plurality of extensions 42 of the second positioning member body 41 is spacedly arranged or evenly distributed along the circumference of an end of the second positioning member body 41, a least one inclined extension of the second positioning member body 41 is inclinedly arranged relative to the second positioning member body 41, the direction of the positive horizontal axis of the inclined extension is substantially the same with the rotational direction of the connecting element 31. By means of such arrangement, when the rotating member 30 rotates, the plurality of extensions 42 are not easily separated from an end of the food. The number of extensions 42 is preferably four and it is understood that the number of extensions 42 can be set according to actual conditions of application.

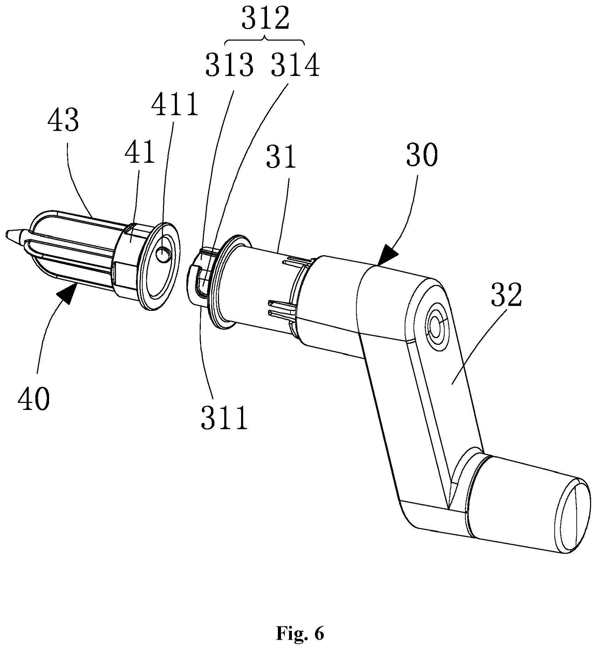

In another embodiment of the second positioning member 40 of the present invention, as shown in Fig. 5 and Fig. 6, the second positioning member 40 includes a second positioning member body 41 and a positioning structure 43 being formed at an end of the second positioning member body 41. Preferably, the second positioning member body 41 and the positioning structure 43 are integrally formed. Alternatively, the second positioning member body 41 and the connecting structure 311 of the connecting element 31 are insertedly mounted with each other. Alternatively, the positioning structure 43 is formed by two sheet structures or other similar structures crossing each other at right angle or perpendicularly or substantially right angle, the positioning structure 43 includes a sharp structure 44 or a similar structure mounted to a crossing portion of two said sheet structures or other similar structures distal to the second positioning member body 41. The sharp structure 44 and the two sheet structures 431 are used for being insertedly mounted inside an end portion of a food, such as a carrot, and an end of the first positioning member body 21 of the first positioning member 20 away from the ring-shaped structure 22 is used for being inserted mounted another end portion of the food, such as a carrot, so that the food can be fixed in a position by the first positioning member 20 and the second positioning member 40. When the second positioning member 40 is driven to be rotated by the connecting element 31, the food, such as the carrot and the first positioning member 20 can then be driven to rotate. Then the cutting member 60 can peel off the food skin and cut the food being rotated, such as carrots.

A locking member is also provided between the connecting structure 311 and the second positioning member body 41. The locking member is used to lock the second positioning member body 41 onto the connecting structure 311 in order to prevent the second positioning member 40 from removing or detachment when the second positioning member 40 is driven to be rotated by the connecting element 31. Due to the fact that both sharp structure 44 of the second positioning member 40 and sheet structure 431 are inserted mounted inside the end portion of the food, the motion of the second positioning member 40 is resisted by the food when the second positioning member 40 is driven to be rotated by the connecting element 31. The second positioning member body 41 of the second positioning member 40 and the connecting structure 311 of the connecting element 31 are insertedly mounted with each other. For example, when the motion of the motion of the second positioning member 40 is resisted by the food, the velocity of rotating movement of the connecting element 31 is then higher than the velocity of the second positioning member 40 due to the food resistance applied to the second positioning member 40. In these circumstances, the second mounting member 40 will then be removed from the connecting element 31. In the embodiment, the second positioning member body 41 of the second positioning member 40 can be locked onto the connecting structure 311 of the connecting element 31 through the locking member so that the second positioning member 40 will not be removed or detached from the connecting element 31 during operation.

It is to be understood that the present invention can also include the applications of the second positioning member 40 of the above two embodiments at the same time in order to hold or mount different kinds of foods to the food cutting device conveniently. Typically, when the second positioning member 40 of any one of embodiments is mounted to the connecting structure 311 of the connecting element 31, the second positioning member 40 of another embodiment can be placed on or received by or stored inside the second position member receiver arranged on the bottom of the support member 50

In the embodiment, the support member 50 comprises a support member body 51 and a support element 52 being formed on a side of the top portion of the support member body 51. The support member body 51 and the support element 52 are integrally formed. The support member body 51 can be slidingly moved along the top portion of the body 10 in the widthwise direction of the body 10. The support element 52 is arranged between two end portions of the first positioning member 20 and a side of the second positioning member 40, the cutting member 60 is removably mounted to a side portion of the support element 52 proximal to the first positioning member 20 and the second positioning member 40. The support element 52 includes the output aperture member 521 or food outlet 521 for being connected or communicated with or forming a passage with the cutting member aperture 63 of the cutting member 60.

Preferably, the top portion of the body 10 includes a concave member 13 arranged between the first mounting member 11 and the second mounting member 12. A plurality of sliding tracks 14 are arranged on two end portions of the concave member 13. Typically, a first portion of the support member body 51 can be received by the said concave member 13. Preferably, the support member 50 includes a plurality of sliding elements 511 or a pair of sliding elements 511 mounted to two respective end portions or two ends of first portion of the support member body 51. The plurality of the sliding element 511 or a pair of sliding elements 511 are slidingly mounted inside the corresponding sliding tracks 14 such that the support member body 51 can be slidingly moved along the top portion of the body 10 in the widthwise direction of the body 10. Accordingly, the support member body 51 can be slidlingly moved out or detached from the top portion of the body 10 in order for allowing the disassembly of the support member 50 and the body 10. As such, the support member 50 and the cutting member 60 can easily be cleaned after use.

Preferably, the sliding track 14 includes a restricting element 142 (see Fig. 3). The sliding element 511 is located or arranged between the inner wall of the corresponding sliding track 14 and the restricting element 142. The restricting element 142 is arranged in order for preventing the detachment of the sliding element 511 from the corresponding sliding track 14. In the embodiment, it is to ensure that the sliding element 511 can be slidingly moved along and within the corresponding sliding track 14. Preferably, in this embodiment, the number of the restricting elements 142 are set to two which are spacedly arranged on or evenly distributed along the corresponding sliding track 14

When a food such as carrot needs to be cut, the support member 50 can be sliding moved in a direction away from the first positioning member 20 and the second positioning member 40 slides so that it can be allowed for maintaining a certain distance between the cutting member 60, the first positioning member 20 and the second positioning member 40. Under this arrangement, it allows that the first positioning member body 21 of the first positioning member 20 and a plurality of extensions 42 of the second positioning member 40 can be insertedly mounted into or inserting to the two ends of the food, such as carrot. Even when the food, such as carrot, is fixed or mounted to the first positioning member 20 and the second positioning member 40, the support member 50 can be slidingly moved along the body 10 in the direction close or proximal to the first positioning member 20 and the second positioning member 40 after the carrot is fixed. The sliding motion of the support member 50 will then be end until the cutting member 60 of the support element 52 abuts against or is in a position closing to the food, such as carrot. At this time, the user should pull the support member body 51 with a hand to allow the cutting member 60 abutting the food, such as carrot, and the other hand should turn the driving element 32 to be rotated. Driven by the connecting element 31, the second positioning member 40, the food, such as carrot and the first positioning member 20 are then rotated along with the driving element 32. During rotation, the food, such as carrot can be peeled and cut into slices by the cutting member 60. In the process of cutting the food, such as carrot, into slices, since the outer diameter of the carrot is getting smaller, one hand of the user should always pull the support member body 51 and let the cutting member 60 abut the carrot until the carrot cannot be cut any more.

Preferably, one end of the sliding track 14 is arranged with a restricting element 141 for preventing the corresponding sliding element 511 from sliding, and the restricting element 141 and the support element 52 are located respectively on the two sides of the first positioning member 20 and the second positioning member 40. The setting of the restricting element 141 can prevent the support member 50 from sliding out to approach the first positioning member 20 and the second positioning member 40, so as to prevent damage to the first positioning member 20 and the second positioning member 40.

The support element 52 and the top portion of the support member body 51 are transitioned through a curved structure, and a concave hand receiver 53 is arranged on the curved structure. The setting of the hand receiver 53 facilitates the user pulling the support member body 51 by hand when cutting food so that the cutting member 60 can abut the food. The cutting member 60 comprises a cutting member body 61 and a cutter 62 arranged on the cutting member body 61. The support element 52 comprises a cutting member receiver 522 on a side close to the first positioning member 20 and the second positioning member 40. The cutting member body 61 is inserted into the cutting member receiver 522 to facilitate the disassembly and assembly of the cutting member 60. The output aperture member 521 is arranged at the bottom of the cutting member receiver 522. The cutting member body 61 has a longitudinal opening. The extension direction of the longitudinal opening is the same as the lengthwise extension direction of the body 10. The cutter 62 is arranged on one side of the longitudinal opening and the said cutting member aperture 63 is formed between the sharp edge of the cutter 62 and the longitudinal opening.

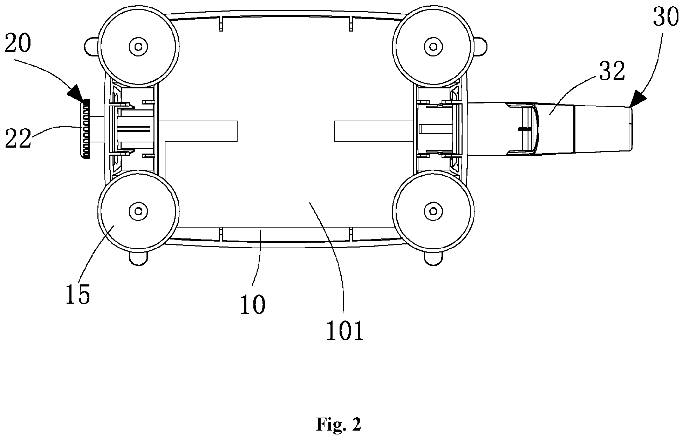

The bottom of the body 10 has a cutting member receiver 101 for receiving the cutting member 60 (see Figure 2). It is understandable that the food cutting device of this invention may comprise various models of cutting member 60 to meet the needs of cutting different foods. Except for the cutting member 60 mounted on the upper portion of the support member 50, the remaining cutting members 60 can be received on the cutting member receiver 101 for facilitating the storage of cutting members 60. The models of cutting members 60 include, for example, the cutting member 60 whose cutter 62 of the cutting member 60 is 0.8 mm, the cutting member 60 whose cutter 62 of the cutting member 60 is 1.2 mm, and so on. For soft food, a cutting member 60 with a thinner cutter 62 can be used; for hard food, a cutting member 60 with a thicker cutter 62 can be used.

In this embodiment, the cutting member aperture 63 is arranged above the cutter 62, so the rotation direction of food is clockwise. In this way, the rotating member 30 needs to be rotated clockwise to realize cutting of food.

The working principle of this invention is: taking a carrot as an example, after cutting off both ends of the carrot to form two even end faces, first slide the support member 50 away from the first positioning member 20 and the second positioning member 40 to separate the cutting member 60 from the first positioning member 20 and the second positioning member 40 by a certain distance, and make the first positioning member body 21 move away from the second positioning member 40 by a certain distance through the ring-shaped structure 22, and insert one end of the carrot into a plurality of extensions 42 of the second positioning member 40, then make the first positioning member body 21 move towards the second positioning member 40 through the ring-shaped structure 22, and make the end of the first positioning member body 21 close to the second positioning member 40 inserted into the other end of the carrot, so as to fix the food. Then place one hand in the hand receiver 53 and pull the support member body 51 to let the cutting member aperture 63 of the cutting member 60 abut the carrot, as long as the pulling force of the hand can let the sharp edge of cutter 62 of the cutting member 60 cut the carrot, and then, use the other hand to rotate the driving element 32 in a clockwise direction. At this time, the second positioning member 40, the carrot, and the first positioning member 20 are driven by the connecting element 31 to rotate together with the driving element 32. During the rotating process of the carrot, the carrot can be cut by the sharp edge of the cutter 62 to achieve peeling and cutting into slices. Peeling and cutting into slices are performed continuously. The carrot peel cut off and the sliced carrot can be discharged from the output aperture member 521. In the process of cutting the carrot into slices, since the outer diameter of the carrot is getting smaller, one hand of the user must always pull the support member body 51 and keep the cutting member aperture 63 of the cutting member 60 abutting on the carrot until the carrot can not be cut any more. The cutting of the carrot is completed at this time. During the process, if the pulling force of the user's hand is appropriate, the carrot cut can form food in continuous pieces.

The invention is convenient to operate, can achieve cutting food into slices, and the peeling of food and the cutting of food into slices can be carried out continuously without need of step-by-step operation, which saves time and effort.

The present invention has been described in detail, with reference to the preferred embodiment, in order to enable the reader to practice the invention without undue experimentation. However, a person having ordinary skill in the art will readily recognizes that many of the previous disclosures may be varied or modified somewhat without departing from the spirit and scope of the invention. Accordingly, the intellectual property rights to this invention are defined only by the following claims.

## Claims

1. A food cutting device, comprising a body, **characterized in that** the said body comprises first and second mounting members extended from two respective ends of a top portion of the said body, a first positioning member is removably mounted inside the said first mounting member, a first end portion of the said first positioning member is arranged between the said first and second mounting members, a second end portion of the said first positioning member is arranged on a side of the said first mounting member distal to the said second mounting member, a rotating member is arranged on a side of the said second mounting member distal to the said first mounting member, the said second mounting member comprises a second mounting hole adapted for allowing an end portion of the said rotating member to be rotataby mounted inside the said second mounting hole, the said second positioning member is configured to be removably mounted to the said rotating member, the said second positioning member is configured to be rotated by the said rotating member, the said second positioning member is arranged at a position between the said first and seconding mounting members opposing to the said first positioning member, a support member is arranged on top of the said body and between the said first and second mounting members, the said support member is adapted for slidingly moving along a top portion of the said body in a widthwise direction of the said body, a cutting member is removably mounted to a top side portion of the said support member proximal to the said first and second positioning members, the said support member comprises an output aperture member being configured for connecting with a cutting member aperture of the said cutting member is arranged on a top portion of the said support member.

2. The food cutting device according to Claim 1, **characterized in that** the said support member further comprises a support member body and a support element mounted on a side of a top portion of the said support member, the said support member body is adapted for slidingly moving along the said top portion of the said body, the said support element is arranged between two end portions of said first positioning member and a side of the said second positioning member, the said cutting member is configured for being removably mounted to a side portion of the said support element proximal to the said first and second positioning members, the said support element comprises the said output aperture member configured for being connected with the said cutting member aperture of the said cutting member.

3. The food cutting device according to Claim 2, **characterized in that** the said top portion of the said body comprises a concave member arranged between the said first and second mounting members, a plurality of sliding tracks are arranged on two end portions of the said concave member, a first portion of the said support member body is configured to be received by the said concave member, the said support member further comprises a plurality of sliding elements mounted to two ends of the of said first portion of the said support member body, the plurality of the said sliding element are slidingly mounted inside the corresponding sliding tracks.

4. The food cutting device according to Claim 3, **characterized in that** a restricting element adapted for restricting the sliding movement of the corresponding sliding element is mounted to an end of the said sliding track, the said restricting element is disposed proximal to the said support member body and distal to the said support element.

5. The food cutting device according to Claim 2, **characterized in that** a curved structure is mounted between both top portions of the said support element and support member body, the said curved structure comprises a hand receiver adapted for allowing the user's hand to rest on it.

6. The food cutting device according to Claim 1, **characterized in that** the said first mounting member comprises a first mounting hole, the said first and second mounting holes are oppositely arranged on the said first and second mounting members respectively, the said first mounting member further comprises a first mounting sleeve being mounted inside the said first mounting hole, the said first mounting sleeve is configured for allowing the said first positioning member to be removably mounted inside the said first mounting sleeve.

7. The food cutting device according to Claim 6, **characterized in that** the said first positioning member comprises a first positioning member body and a ring-shaped structure being mounted to an end of the said first positioning member body, the said first positioning member body is removably mounted inside the said fist mounting sleeve, another end of the said first positioning member body is arranged at a position between the said first and second mounting members which is distal to the said ring-shaped structure, the said ring-shaped structure is arranged on a side of the said first mounting member distal to the said second mounting member.

8. The food cutting device according to Claim 1, **characterized in that** the said rotating member comprises a connecting element and a driving element, the said connecting element is rotataby mounted to the said seconding mounting hole, a first end of the said connecting element is mounted to the said driving element, a second end of the said connecting element is removably mounted to the said second positioning member, the said driving element is mounted to a side of the said second mounting member distal to the said first mounting member, the said connecting element is adapted to be driven to rotate relative to the said second mounting member by the said driving element, the said second mounting member is adapted to be rotated by the said connecting element.

9. The food cutting device according to Claim 8, **characterized in that** the said connecting element comprises a connecting structure mounted to the said second end of the said connecting element, the said connecting structure is arranged between the said first and second mounting members, the said second positioning member comprises a second positioning member body and a plurality of extensions extended from an end of the said second positioning member body, the said connecting structure is mounted to the said second positioning member body.

10. The food cutting device according to Claim 8, **characterized in that** the said connecting element further comprises a connecting structure mounted to the said second end of the said connecting element, the said connecting structure is arranged between the said first and second mounting members, the said second positioning member comprises a second positioning member body and a positioning structure extended from an end portion of the said second positioning member body, the said connecting structure is mounted to the said second positioning member body.

11. The food cutting device according to any one of Claim 9 or Claim 10, **characterized in that** a locking member is arranged between the said connecting structure and the said second positioning member body, the said locking member is adapted for locking the said second positioning member body to the connecting structure and preventing the said second positioning member to be removed from the said connecting structure when the said second positioning member is rotated by the said connecting structure.

12. The food cutting device according to Claim 11, **characterized in that** the said locking member comprises a convex structure arranged inside the said second positioning member body and L-shaped concave region being arranged on the said connecting structure, the said convex structure and a first portion of the said L-shaped concave region is configured to be received with each other, the said second positioning member is adapted to be locked by the said connecting structure when the said convex structure is received by a second portion of the said L-shaped concave region, an extending direction of the said second portion of the said L-shaped concave region is opposite to a rotational direction of the said connecting structure, the said second portion of the said L-shaped concave region is adapted for moving towards the said convex structure when the velocity of rotating movement of the said connecting element is higher than the velocity of the said second positioning member and when a reaction force is formed against the said second positioning member by a rotational movement of the said second positioning member driven by the said connecting element.

13. The food cutting device according to Claim 9, **characterized in that** the plurality of extensions of the said second positioning member body is spacedly arranged along the circumference of an end of the said second positioning member body, a least one inclined extension of the said second positioning member body is inclinedly arranged relative to the said second positioning member body, the direction of the positive horizontal axis of the said inclined extension is substantially the same with the rotational direction of the said connecting element.

14. The food cutting device according to Claim 10, **characterized in that** the said positioning structure is formed by two sheet structures crossing each other perpendicularly, the positioning structure comprises a sharp structure mounted to a crossing portion of two said sheet structures distal to the said second positioning member body.

15. The food cutting device according to Claim 2, **characterized in that** the said cutting member comprises a cutting member body and a cutter mounted to the said cutting member body, the said support element comprises a first cutting member receiver adapted for receiving the said cutting member body arranged proximal to the sides of said first and second positioning members, the said cutting member body comprises a longitudinal opening, the line of direction of the said longitudinal opening is parallel to the length of the said body, the cutter is arranged on a side of the said longitudinal opening, the said cutting member aperture is formed between a sharp edge of the said cutter and the said longitudinal opening.

16. The food cutting device according to Claim 1, **characterized in that** the said body further comprises a plurality of suction cups mounted to four corner portions of the bottom face of the said body.

17. The food cutting device according to Claim 8, **characterized in that** the said second mounting member further comprises a second mounting sleeve mounted inside the said second mounting hole of the said second mounting member, the said connecting element is rotatably mounted inside the said second mounting member.

18. The food cutting device according to Claim 1, **characterized in that** the said support member further comprises a second positioning member receiver configured for receiving the said second positioning member arranged on the bottom portion of the said support member.

19. The food cutting device according to Claim 1, **characterized in that** the said body further comprises a second cutting member receiver configured for receiving the said cutting member arranged on the bottom portion of the said body.
